# EUROPÄISCHE PATENTANMELDUNG

(11) **EP 1 137 138 A2**
(43) Veröffentlichungstag der Anmeldung: **26.09.2001**
(21) Anmeldenummer: 01106641.2
(22) Anmeldetag: 16.03.2001
(51) Int. Cl.: H02B 13/065

(54) **Auslöser für eine gekapselte Schaltanlage**

(30) Priorität: 17.03.2000 DE 10013025; 06.05.2000 DE 10022185
(71) Anmelder: Fritz Driescher KG, Spezialfabrik für Elektrizitätswerksbedarf GmbH & Co., D-41844 Wegberg (DE)
(72) Erfinder: Bünger,Stefan, 41812 Erkelenz (DE); Nellen,Udo, 41517 Grevenbroich (DE); Wirtz,Gottfried, 41844 Wegberg (DE)
(74) Vertreter: Bergen, Klaus, Dipl.-Ing.

(57) **Zusammenfassung**

Die Erfindung betrifft einen Auslöser (2) für eine gekapselte Schaltanlage (1), insbesondere eine gasisolierte Mittelspannungs-Schaltanlage, bestehend aus einem oder mehreren Schaltfedern in einer gemeinsamen Gasfüllung im wesentlichen mit Lasttrenn- und/oder Leistungsschaltern, Erdungsschaltern, Antriebselementen, Sammelschienen und angeschlossenen Leitungen. Um im Störlichtbogenfall eine schnelle und sichere Erdung der Anlage oder eine Auslösung der übergeordneten Schutzsysteme zu garantieren, besitzt der Auslöser (2) ein Gehäuse (9), das an der Kapselung (5) der Schaltanlage (1) angeordnet ist und einen Zylinderabschnitt (11) aufweist, in dem ein Betätigungskolben (12) gelagert ist, wobei zwischen dem Inneren der Schaltanlage (1) und dem Zylinderabschnitt (11) eine fluidische Verbindung (19) besteht.

## Beschreibung

Die Erfindung betrifft einen Auslöser für eine gekapselte Schaltanlage, insbesondere eine gasisolierte Mittelspannungs-Schaltanlage, bestehend aus einem oder mehreren Schaltfedern in einer gemeinsamen Gasfüllung im wesentlichen mit Lasttrenn- und/oder Leistungsschaltern, Erdungsschaltern, Antriebselementen, Sammelschienen und angeschlossenen Leitungen.

Eine Auslöseeinrichtung der gattungsgemäßen Art ist aus der DE 36 06 770 C2 bekannt. Danach wird im Störlichtbogenfall in einer Schaltanlage der durch den Lichtbogen entstehende Druck genutzt, um eine Abschaltung, d.h. Erdung der Anlage zu bewerkstelligen. Nach der vorbekannten Lehre wird ein nachgiebiger Abschnitt vorgesehen, der im Störlichtbogenfall auf ein Gestänge einwirkt, mit dem wiederum ein federvorgespannter Kraftspeicher ausgelöst wird, der seinerseits alle in der Anlage befindlichen Erder betätigt, die unabhängig vom Entstehungsort des Lichtbogens in der Schaltanlage die Energieeinspeisung in jedem Falle sicher unterbrechen.

Aus der DE 196 01 639 A1 ist ebenfalls eine Auslöseeinrichtung für Schaltanlagen beschrieben, bei der mittels eines Sensors der Druck in der Schaltanlage gemessen und im Falle eines unzulässig hohen Wertes durch einen Gaserzeuger, wie er von Airbag-Einrichtungen bekannt ist, eine Verklinkung ausgelöst und die Erdung erreicht wird.

Während die zuletzt genannte Ausführung einer Auslöseeinrichtung sehr aufwendig ist, hat sich die zuerst erläuterte Lösung bestens bewährt, obwohl eine quasi indirekte Auslösung erfolgt.

Es ist daher **Aufgabe** der vorliegenden Erfindung, einen Auslöser für gattungsgemäße Anlagen zu schaffen, der einen einfachen und kompakten Aufbau besitzt und eine kurze und direkte Betätigung des Kraftspeichers ermöglicht und/oder die Auslösung eines übergeordneten Schutzsystems bewirkt.

Diese Aufgabe wird erfindungsgemäß durch
ein vorzugsweise an der Kapselung der Schaltanlage angeordnetes Gehäuse,
einen einen Betätigungskolben aufnehmenden Zylinderabschnitt im Gehäuse und
eine fluidische Verbindung zwischen dem Inneren der Schaltanlage und dem Zylinderabschnitt
gelöst.

Auf der Basis dieser Merkmalskombination eines Kolben-Zylinder-Systems zur direkten Betätigung des Kraftspeichers und/oder Auslösung eines übergeordneten Schutzsystems unter Nutzung einer fluidischen Verbindung ergeben sich vielfältige Einsatzmöglichkeiten bei hohem Sicherheitsstandard.

Gemäß einer ersten Vorzugsausführung ist vorgesehen, daß der Betätigungskolben bei seiner Verschiebung auf ein Auslöseelement wirkt, das mit einem Kraftspeicherantrieb und/oder einem Auslöse/Meldekontakt in Verbindung steht. Zwischen dem Betätigungskolben und dem Kraftspeicherantrieb und/oder dem Auslöse/Meldekontakt ist bevorzugt nur ein einziges Auslöseelement in Form eines Auslösehebels angeordnet.

Eine besonders einfache und damit auch wirtschaftlich herstellbare Ausführungsform wird erreicht, wenn die fluidische Verbindung durch ein im wesentlichen zylindrisches Teil mit einer Längsbohrung und mindestens einer die Längsbohrung schneidenden Querbohrung oder mindestens einem die Längsbohrung schneidenden Schlitz geschaffen wird. Hierbei wird das zylindrische Teil in einer Bohrung im Gehäuse angeordnet, die mit einer Öffnung der Kapselung kommuniziert. Mit Vorteil ist das zylindrische Teil dabei eine Schraube mit Hohl- oder Sackbohrung, die konzentrisch zur Öffnung angeordnet ist.

Der Auslöser kann dann in vorteilhaft einfacher Weise an der Schaltanlage angebracht werden, wenn an der Kapselung der Schaltanlage eine Gewindebuchse befestigt ist, in die die Schraube eingesetzt ist; die Gewindebuchse ist dabei bevorzugt konzentrisch an der Kapselung angeschweißt. Zur sicheren Betriebsweise ist weiterbildungsgemäß zwischen Gewindebuchse und Gehäuse eine Dichtung angeordnet; ebenso kann der Auslöser direkt mit der Kapselung der Schaltanlage verschweißt sein.

Der Lagesicherung des Kolbens im Zylinder kommt eine wesentliche Bedeutung zu, insbesondere auch unter Berücksichtigung der Tatsache, daß der Auslöser den Anlagenüberdruck und betriebsbedingte Temperaturzyklen kompensieren können muß, ohne den Auslösevorgang zu bewirken. Daher ist vorgesehen, daß am Betätigungskolben ein elastisches Element, insbesondere ein Federelement, angreift, das den Betätigungskolben in einer Ruheposition hält. Das Federelement kann eine Ringfeder oder auch eine geeignete Doppelblattfeder sein. Die Feder kann in eine Eindrehung in der Stange des Betätigungskolbens eingreifen und im Gehäusedeckel der Auslöseeinrichtung gehalten sein.

Eine entsprechende Kompensationswirkung hat nach einem weiteren Merkmal der Erfindung eine vom Kolbenstangenende im Störfall zu durchstoßende Metall- oder Kunststoffolie, die erst bei Erreichen eines vorbestimmten Druckniveaus nachgibt bzw. reißt.

Zwischen dem Zylinderabschnitt und dem Betätigungskolben kann ebenfalls eine Dichtung angeordnet sein, so daß im Störlichtbogenfall sichergestellt ist, daß die Druckenergie gänzlich zur Betätigung des Kolbens genutzt werden kann.

Am Auslöser kann ein Anschluß für ein Meßinstrument oder einen Meldeschalter angeordnet sein.

Das Auslösergehäuse besteht bevorzugt aus Kunststoff oder aus Aluminium. Der Betätigungskolben besteht bevorzugt ebenfalls aus Kunststoff oder aus ähnlich leichtem Material.

In der Zeichnung ist ein Ausführungsbeispiel der Erfindung dargestellt. Es zeigen:
- Fig. 1: einen schematischen Ausschnitt einer Mittelspannungs-Schaltanlage mit Auslöser und Kraftspeicher,
- Fig. 2: einen Schnitt durch den Auslöser.

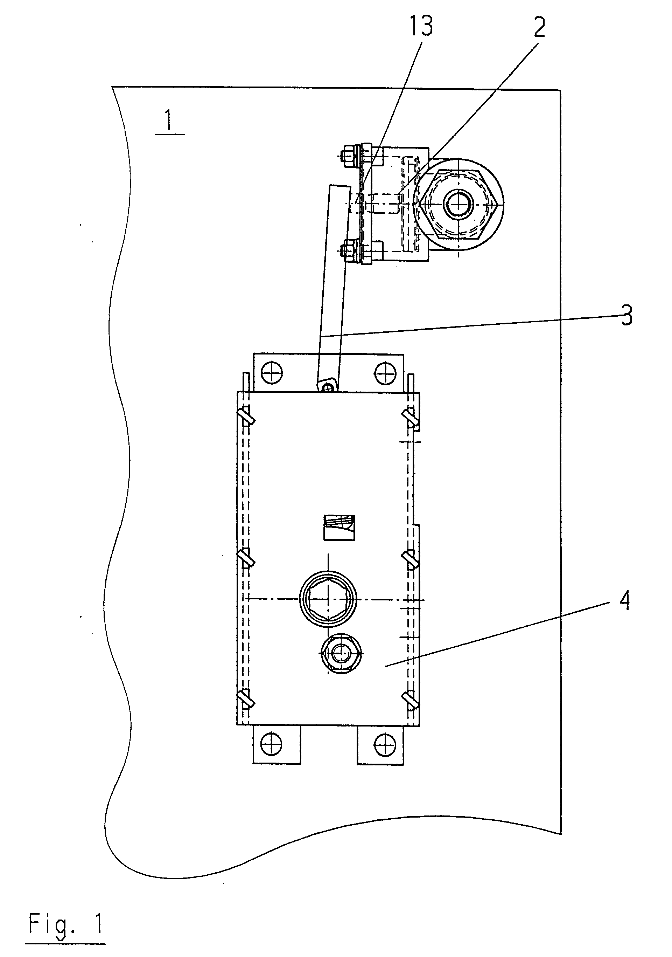

In Fig. 1 ist mit 1 eine gasisolierte, gekapselte Mittelspannungs-Schaltanlage bezeichnet, von der nur ein Teil der Kapselung 5 zu sehen ist, an der der Auslöser 2 befestigt ist.

Bei einer Druckerhöhung in der Anlage 1 infolge eines Störlichtbogenfalles wirkt ein noch näher zu beschreibender Betätigungskolben mit seiner Stange 13 auf den Auslösehebel 3, der mit dem Kraftspeicher 4 verbunden ist. Durch die Betätigung des Kraftspeichers 4 im Falle eines Störlichtbogens werden - nicht dargestellte - Erdungsschalter in der Schaltanlage 1 ausgelöst. Weitere Einzelheiten sind der DE 36 06 770 C2 zu entnehmen.

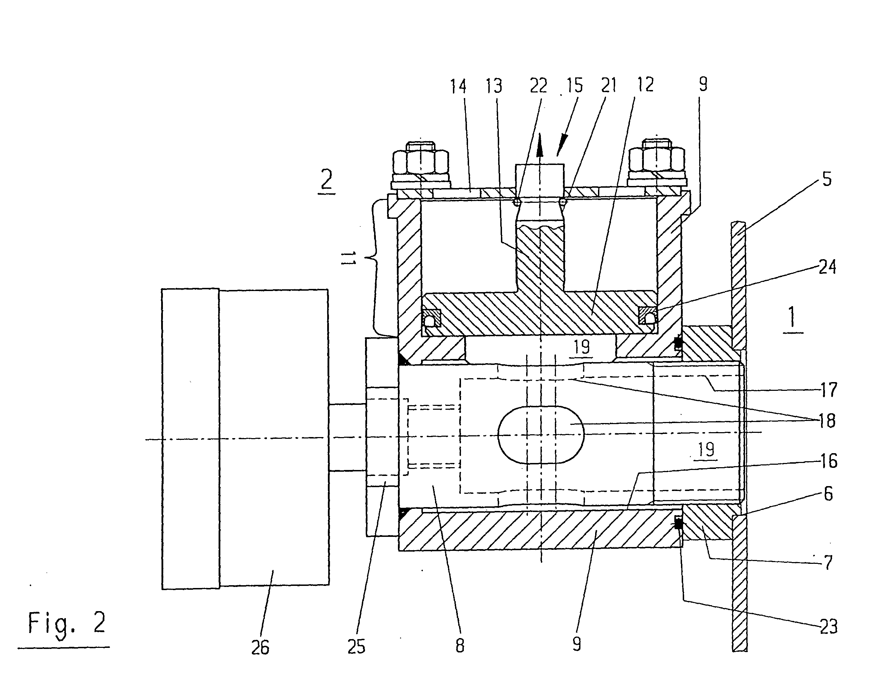

Details der Auslöseeinrichtung 2 gehen aus Fig. 2 hervor. Die Einrichtung 2 ist mit Schaltanlage 1 verbunden, von der in der Figur nur ein Wandteil der Kapselung 5 zu erkennen ist. Die Kapselung 5 weist eine Öffnung 6 auf, in der eine Gewindebuchse 7 eingesetzt und mit der Kapselung 5 gasdicht verschweißt ist.

Der Auslöser 2 ist mit einer Schraube 8 über die Gewindebuchse 7 an die Kapselung 5 der Schaltanlage 1 angeschraubt.

Der Auslöser 2 besitzt ein Gehäuse 9, das gemäß Fig. 2 im oberen Bereich als Zylinderabschnitt 11 ausgeführt ist, der einen Betätigungskolben 12 mit Kolbenstange 13 aufnimmt, die durch einen Gehäusedeckel 14 des Auslösers 2 ragt. Das Ende 15 der Kolbenstange 13 wirkt im Störlichtbogenfall auf den in Fig. 1 dargestellten Auslösehebel 3.

Im in der Fig. 2 unten dargestellten Bereich ist das Gehäuse 9 quaderförmig mit einer durchgehenden Zylinderbohrung 16 ausgebildet, jedoch liegt hier die Zylinderachse senkrecht zur Achse des Zylinderabschnitts 11. Die Bohrung 16 wird von der Schraube 8, die mit einer Sack- oder Hohlbohrung 17 versehen ist, durchragt.

Die Schraube 8 weist neben der Bohrung 17, die sich in Schraubenlängsrichtung erstreckt, in ihrer Wandung bzw. Schlitze 18 auf. Wie aus Fig. 2 ersichtlich wird, ergibt sich dadurch eine fluidische Verbindung 19 zwischen dem Inneren der Schaltanlage 1 und dem Zylinderabschnitt 11, also eine Verbindung, die den Druckaustausch ermöglicht.

Der im Lichtbogenfall im Inneren der Schaltanlage 1 entstehende Druck wirkt über die Hohlbohrung 17 und die Querbohrungen/Schlitze 18 auf den Boden des Betätigungskolbens 12, der sich infolge des ansteigenden Drucks in Pfeilrichtung bewegt und mit seinem Kolbenende 15 nach Überwinden des Kompensationsgegendrucks auf den Auslösehebel 3 drückt, der den Kraftspeicher 4 betätigt.

Damit dies tatsächlich nur im Störlichtbogenfall erfolgt, weist die Kolbenstange 13 eine konisch geformte Eindrehung 21 auf, in die ein elastisches Element in Form einer Ringfeder 22 eingreift. Wie aus der Fig. 2 ersichtlich ist, wird ein gewisser Mindestdruck benötigt, um die Kolbenstange 13 gegen den Druck der Feder 22 in Pfeilrichtung zu verschieben. Die Federkraft ist im vorliegenden Fall so gewählt, daß zur Betätigung des Kolbens 12 im Inneren der Schaltanlage 1 ein Überdruck zwischen 500 mbar und 1 bar vorliegen muß.

Zur gasdichten Ausführung ist sowohl zwischen der Gewindebuchse 7 und dem Gehäuse 9 als auch zwischen dem Zylinderabschnitt 11 und dem Kolben 12 je eine Dichtung 23 bzw. 24 angeordnet.

Der Auslöser in der dargestellten Ausführung besitzt auch einen Anschluß 25 für ein Manometer 26, der im vorliegenden Falle aus einer bis zur Sackbohrung 17 reichenden Gewindebohrung im Sechskantkopf der Schraube 8 besteht. In diese Gewindebohrung 25 kann das Manometer 26 oder andere Meß- und Anzeigeinstrumente eingeschraubt werden.

Der beschriebene Auslöser zeichnet sich insbesondere dadurch aus, daß er in unmittelbarer Nähe des Kraftspeichers angeordnet werden kann und lediglich ein einziges Übertragungsglied (Auslösehebel 3) zur Betätigung benötigt wird.

## Patentansprüche

1. Auslöser (2) für eine gekapselte Schaltanlage, insbesondere eine gasisolierte Mittelspannungs-Schaltanlage (1), bestehend aus einem oder mehreren Schaltfedern in einer gemeinsamen Gasfüllung im wesentlichen mit Lasttrenn- und/oder Leistungsschaltern, Erdungsschaltern, Antriebselementen, Sammelschienen und angeschlossenen Leitungen,
**gekennzeichnet durch**
ein vorzugsweise in oder an der Kapselung (5) der Schaltanlage (1) angeordnetes Gehäuse (9),
einen einen Betätigungskolben (12) aufnehmenden Zylinderabschnitt (11) im Gehäuse (9) und
eine fluidische Verbindung (19) zwischen dem Inneren der Schaltanlage (1) und dem Zylinderabschnitt (11).

2. Auslöser nach Anspruch 1, **dadurch gekennzeichnet, daß** der Kolben (12) bei seiner Verschiebung ein mit einem Kraftspeicher (4) verbundenes Auslöseelement (3) betätigt.

3. Auslöser nach Anspruch 2, **dadurch gekennzeichnet, daß** das Auslöseelement (3) aus nur einem Hebel besteht.

4. Auslöser nach Anspruch 1, **dadurch gekennzeichnet, daß** der Kolben (12) bei seiner Verschiebung eine Auslösung des übergeordneten Schutzsystems bewirkt.

5. Auslöser nach einem der Ansprüche 1 bis 4, **dadurch gekennzeichnet, daß** die fluidische Verbindung (19) durch ein im wesentlichen zylindrisches Teil (8) mit einer Längs-Hohlbohrung (17) und mindestens einer die Längsbohrung schneidenden Querbohrung (18) oder mindestens einem die Längsbohrung schneidenden Schlitz geschaffen wird.

6. Auslöser nach Anspruch 5, **dadurch gekennzeichnet, daß** die Längsachse des Zylinderabschnitts (11) senkrecht zu der des zylindrischen Teils (8) verläuft.

7. Auslöser nach Anspruch 5 oder 6, **dadurch gekennzeichnet, daß** das zylindrische Teil (8) in einer Bohrung (16) im Gehäuse (9) angeordnet ist, die mit einer Öffnung (6) der Kapselung (5) kommuniziert.

8. Auslöser nach einem der Ansprüche 5 bis 7, **dadurch gekennzeichnet, daß** das zylindrische Teil (8) eine Schraube mit Sack- oder Hohlbohrung (17) ist, die konzentrisch zur Öffnung (6) angeordnet ist.

9. Auslöser nach Anspruch 8, **dadurch gekennzeichnet, daß** das Gehäuse (9) mittels der Schraube (8), die in eine an der Kapselung (5) befestigte Gewindebuchse (7) eingeschraubt ist, an der Schaltanlage (1) befestigt ist.

10. Auslöser nach Anspruch 9, **dadurch gekennzeichnet, daß** die Gewindebuchse (7) konzentrisch zur Öffnung (6) an der Kapselung (5) angeschweißt ist.

11. Auslöser nach einem der Ansprüche 7 bis 10, **dadurch gekennzeichnet, daß** das Gehäuse (9) konzentrisch zur Öffnung (6) an der Kapselung (5) angeschweißt ist.

12. Auslöser nach einem der Ansprüche 9 bis 11, **dadurch gekennzeichnet, daß** zwischen der Gewindebuchse (7) und dem Gehäuse (9) eine Dichtung (23) angeordnet ist.

13. Auslöser nach einem der Ansprüche 1 bis 12, **gekennzeichnet durch** ein elastisches Element (22), insbesondere ein Federelement am Betätigungskolben (12), zur Kompensation des Anlagenüberdrucks und/oder von Temperaturschwankungen.

14. Auslöser nach Anspruch 13, **dadurch gekennzeichnet, daß** das Federelement (22) eine Ringfeder ist.

15. Auslöser nach Anspruch 14, **dadurch gekennzeichnet, daß** die Ringfeder (22) in der Kolbenruheposition in eine Eindrehung (21) in der Stange (13) des Betätigungskolbens (12) eingreift und im Gehäusedeckel (14) des Auslösers (2) gehalten ist.

16. Auslöser nach Anspruch 13, **gekennzeichnet durch** mindestens eine Blattfeder als Federelement.

17. Auslöser nach Anspruch 13, **gekennzeichnet durch** eine von der Kolbenstange (13) bei Verlassen der Ruheposition zu durchstoßende Folie oder dgl.

18. Auslöser nach einem der Ansprüche 1 bis 17, **dadurch gekennzeichnet, daß** zwischen dem Zylinderabschnitt (11) und dem Betätigungskolben (12) eine Dichtung (24) angeordnet ist.

19. Auslöser nach einem der Ansprüche 1 bis 18, **gekennzeichnet durch** einen Anschluß (25) für ein Meßinstrument (26), insbesondere für ein Manometer am Gehäuse (9).

20. Auslöser nach einem der Ansprüche 1 bis 19, **dadurch gekennzeichnet, daß** das Gehäuse (9) aus Kunststoff besteht.

21. Auslöser nach einem der Ansprüche 1 bis 19, **dadurch gekennzeichnet, daß** das Gehäuse (9) aus Leichtmetall, insbesondere aus Aluminium besteht.

22. Auslöser nach einem der Ansprüche 1 bis 21, **dadurch gekennzeichnet, daß** der Betätigungskolben (12) aus Kunststoff besteht.

23. Auslöser nach einem der Ansprüche 1 bis 21, **dadurch gekennzeichnet, daß** der Betätigungskolben (12) aus Leichtmetall besteht.

24. Auslöser nach einem der Ansprüche 13 bis 23, **gekennzeichnet durch** eine mit dem elastischen Element (22) zusammenwirkende konische Spitze der Kolbenstange (13).
